(19) Europäisches Patentamt
European Patent Office
Office européen des brevets

(11) EP 3 448 911 B1

(12) EUROPEAN PATENT SPECIFICATION

(45) Date of publication and mention of the grant of the patent:
**31.03.2021 Bulletin 2021/13**

(21) Application number: **17723761.7**

(22) Date of filing: **21.04.2017**

(51) Int Cl.:
***C08G 64/04*** *(2006.01)* ***C08G 64/12*** *(2006.01)*
***C08G 77/445*** *(2006.01)* ***C08L 69/00*** *(2006.01)*

(86) International application number:
**PCT/IB2017/052317**

(87) International publication number:
**WO 2017/187310 (02.11.2017 Gazette 2017/44)**

# (54) THERMOPLASTIC COMPOSITIONS FOR LASER DIRECT STRUCTURING AND METHODS FOR THE MANUFACTURE AND USE THEREOF

THERMOPLASTISCHE ZUSAMMENSETZUNGEN ZUR LASERDIREKTSTRUKTURIERUNG UND VERFAHREN ZUR HERSTELLUNG UND VERWENDUNG DAVON

COMPOSITIONS THERMOPLASTIQUES DESTINÉES À LA STRUCTURATION DIRECTE LASER ET PROCÉDÉS DE FABRICATION ET D’UTILISATION ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2016 US 201662328843 P**

(43) Date of publication of application:
**06.03.2019 Bulletin 2019/10**

(73) Proprietor: **SHPP Global Technologies B.V.**
**4612 PX Bergen op Zoom (NL)**

(72) Inventors:
- **GONG, Feng**
  **Shanghai 201317 (CN)**
- **SONG, Shijie**
  **Shanghai 201109 (CN)**
- **CHENG, Yunan**
  **Shanghai 201203 (CN)**

(74) Representative: **Elzaburu S.L.P.**
**Miguel Angel 21, 2nd floor**
**28010 Madrid (ES)**

(56) References cited:
**WO-A1-2013/067684 WO-A1-2015/033295**
**WO-A1-2015/160965 WO-A1-2015/166381**
**US-A1- 2014 296 410**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

RELATED APPLICATION

This application claims priority to and the benefit of U.S. Patent Application No. 62/328,843, filed April 28, 2016.

TECHNICAL FIELD

The disclosure concerns thermoplastic compositions for laser direct structuring.

BACKGROUND

As one of the three dimensional molded interconnect device (3D-MID) solutions, laser directed structuring (LDS) recently has become the dominant antenna build solution for smart phones. LDS capable thermoplastics can help to integrate the structural and antenna part. Therefore, many LDS compounds have been developed in the market to meet different design applications. Polycarbonate (PC) has proven to be an ideal structural material used in portable devices; however, the glass transition temperature of normal PC can only reach 130-140°C. Therefore, normal PC based LDS compounds cannot be used in high heat applications. For example, the required processing or environment temperature is above 140°C.

In new generation smart phone and wearable device designs, LDS compounds are sometimes required as the first shoot, which will then be over-molded by a second shoot to cover the first LDS layer. Normally, the second shoot material would be silicon rubber, thermoplastic polyurethane TPU, thermoplastic vulcanates TPV, or high flow polycarbonate PC. Thus, the first shoot material layer needs to robustly sustain and maintain good dimensional stability during the whole molding process. Conventional bisphenol A BPA-PC or Polycarbonate/Siloxane copolymer (commercially available for example from SABIC™ as EXL-PC) based LDS compounds cannot pass this high heat over-molding process. Therefore, a PC based LDS compound with high heat dimensional stability is needed to meet both temperature and processing requirements.

SUMMARY OF THE INVENTION

This disclosure includes thermoplastic compositions. In certain aspects, a thermoplastic composition may comprise: (a) from 5 weight percent (wt. %) to 55 wt. %, or from about 5 wt. %to about 55 wt. %of at least one aromatic polycarbonate; (b) from 45 wt. % to 85 wt. %, from about 45 wt. %to about 85 wt. %of at least one high heat 2-phenyl-3,3-bis(4-hydroxyphenyl)phthalimidine (PPPBP)-polycarbonate copolymer; (c) greater than 0 wt. % to 15 wt. %, or greater than 0 wt. %to about 15 wt. %of at least one polycarbonate-siloxane copolymer; and (d) from 0.5 wt. % to 10 wt. %, or from about 0.5 wt. %to about 10 wt. %of at least one laser direct structuring additive; wherein the laser direct structuring additive is a filler selected from a metal oxide; a metal oxide coated filler; or a combination thereof; wherein the thermoplastic composition is capable of being plated after being activated using a laser; and wherein the thermoplastic composition has a heat distortion (or deflection) temperature (HDT) higher than 150 degrees Celsius (°C), as determined by ASTM D 648.

Still other embodiments provide methods for making these thermoplastic compositions, with steps including blending, molding, laser treating, and plating the thermoplastic compositions and articles made from these processes.

DETAILED DESCRIPTION OF THE INVENTION

The present disclosure relates to improvements of heat resistance by adding a modified polycarbonate copolymer such as LEXAN™ XHT copolymer (grade of resin polymers commercially available from SABIC™). Given the preferred use of LDS to build antennae for smart phone and polycarbonate to be the preferred material used in portable devices, the present disclosure addresses the problem that conventional PC-based LDS compounds may not be suitable in high heat applications between 130-140 °C. Specifically, processing and ambient temperatures above 140 °C, or above about 140 °C) are often implemented to process the PC-based LDS compound. The present disclosure relates to compositions that improve heat distortion temperatures of such compounds to over 150 °C, or over about 150 °C) while recovering impact strength performance.

Disclosed herein are polycarbonate thermoplastic compositions that exhibit improved thermal resistance and recovered notched impact strength properties. The thermoplastic compositions comprise (a) from 5 wt. % to 55 wt. %, or from about 5 wt. %to about 55 wt. %of at least one aromatic polycarbonate; (b) from 45 wt. % to 85 wt.% from about 45 wt. %to about 85 wt. %of at least one high heat PPPBP-polycarbonate copolymer; (c) from greater than 0 wt. %to 15 wt. %, from greater than 0 wt. % to about 15 wt. % of at least one polycarbonate-siloxane copolymer; and (d) from

0.5 wt. % to 10 wt. %, or from about 0.5 wt. % to about 10 wt. % of at least one laser direct structuring additive; wherein the laser direct structuring additive is a filler selected from a metal oxide; a metal oxide coated filler; or a combination thereof; wherein the composition is capable of being plated after being activated using a laser; and wherein the composition has a heat distortion temperature higher than 150 °C , as determined by ASTM D 648. The thermoplastic compositions display an advantageous combination of properties that render them useful in applications which are required for both data transfer and identification, e.g., automotive, healthcare, notebook personal computers, e-books, tablet personal computers, and the like. Disclosed herein also are methods of manufacturing the thermoplastic compositions and articles prepared therefrom.

The present disclosure can be understood more readily by reference to the detailed description, examples, drawings, and claims described herein. It is to be understood that this disclosure is not limited to the specific thermoplastic compositions, articles, devices, systems, and/or methods disclosed unless otherwise specified, as such can, of course, vary. It is also to be understood that the terminology used herein is for the purpose of describing particular aspects only and is not intended to be limiting. Those of ordinary skill in the relevant art will recognize and appreciate that changes and modifications can be made to the various aspects of the disclosure described herein, while still obtaining the beneficial results of the present disclosure. It will also be apparent that some of the desired benefits of the present disclosure can be obtained by selecting some of the features of the present disclosure without utilizing other features. The following description is provided as illustrative of the principles of the present disclosure and not in limitation thereof. Various combinations of elements of this disclosure are encompassed by this disclosure, e.g. combinations of elements from dependent claims that depend upon the same independent claim.

Unless otherwise expressly stated, it is in no way intended that any method set forth herein be construed as necessarily requiring that its steps be performed in a specific order. Where a method claim does not specifically state in the claims or descriptions that the steps are to be limited to a specific order, it is no way intended that an order be inferred, in any respect.

It is also to be understood that the terminology used herein is for the purpose of describing particular aspects only and is not intended to be limiting. As used in the specification and in the claims, the term "comprising" may include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

Unless otherwise specified, average molecular weights refer to weight average molecular weights (Mw) and percentages refer to weight percentages (wt%) which, unless specifically stated to the contrary, are based on the total weight of the composition in which the component is included. In all cases, where combinations of ranges are provided for a given composition, the combined value of all components does not exceed 100 wt. %

Component materials to be used to prepare disclosed thermoplastic compositions of the disclosure as well as the thermoplastic compositions themselves to be used within methods are disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. This concept applies to all aspects of this application including, but not limited to, steps in methods of making and using the thermoplastic compositions of the disclosure.

References in the specification and concluding claims to parts by weight, of a particular element or component in a composition or article denotes the weight relationship between the element or component and any other elements or components in the composition or article for which a part by weight is expressed. Thus, in a composition containing 2 parts by weight of component X and 5 parts by weight component Y, X and Y are present at a weight ratio of 2:5, and are present in such ratio regardless of whether additional components are contained in the compound.

Compounds disclosed herein are described using standard nomenclature. For example, any position not substituted by any indicated group is understood to have its valency filled by a bond as indicated, or a hydrogen atom.

As used herein, the terms "number average molecular weight" ("Mn") and "weight average molecular weight" ("Mw") are defined by the respective formulae:

$$Mn = \frac{\Sigma N_i M_i}{\Sigma N_i}, \qquad Mw = \frac{\Sigma N_i M_i^2}{\Sigma N_i M_i},$$

where $M_i$ is the molecular weight of a chain and $N_i$ is the number of chains of that molecular weight. Both Mn and Mw can be determined for polymers, such as polycarbonate polymers or polycarbonate-PMMA copolymers, by methods well known to a person having ordinary skill in the art.

As used herein, the terms "polydispersity index" or "PDI" can be used interchangeably, having a value equal to or greater than 1, and are defined by the formula:

$$PDI = \frac{Mw}{Mn}.$$

The terms "polycarbonate" or "polycarbonates" as used herein includes copolycarbonates, homopolycarbonates and (co)polyester carbonates.

**I. Thermoplastic Compositions**

The improved thermoplastic compositions described herein are particularly useful in connection with laser direct structuring technology, providing enhanced plating performance while exhibiting relatively good mechanical properties. The disclosed thermoplastic compositions generally comprise a blend of a polycarbonate polymer including the addition of LEXAN™ XHT copolymer, a polycarbonate - siloxane copolymer, and at least one laser direct structuring additive; and may further optionally comprise one or more additional additives.

The disclosed thermoplastic compositions can exhibit, for example, improved mechanical, thermal, and/or morphological properties. Further, for example, the thermoplastic compositions may show either or both improved ductility and improved impact strength, without adversely affecting other mechanical and thermal properties.

**A. PPPBP/BPA (XHT™ Tradename) Resin Copolymer**

The compound LEXAN™ XHT as used herein refers to a 2-phenyl-3,3-bis(4-hydroxyphenyl) phthalimidine (PPPBP) carbonate and bisphenol A (PPPBP/BPA) copolycarbonate comprising 33 mol% or about 33 mol % PPPBP polycarbonate - also called 3,3-bis(4-hydroxyphenyl)-2-phenylisoindolin-1-one. The XHT compound has been developed as a polycarbonate copolymer with a high heat resistance what may prove to be more color stable in high heat processing.

The terms "BPA" or "bisphenol A," which can be used interchangeably, as used herein refers to a compound having a structure represented by the formula:

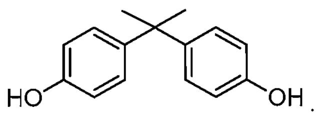

BPA can also be referred to by the name 4,4'-(propane-2,2-diyl)diphenol; *p,p*'-isopropylidenebisphenol; or 2,2-bis(4-hydroxyphenyl)propane. BPA has the CAS # 80-05-7.

The terms "BisAP" or "bisphenol AP," which can be used interchangeably, as used herein refers to a compound having a structure represented by the formula:

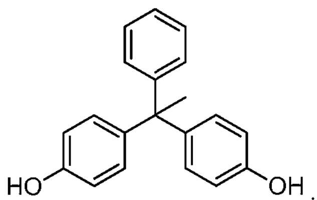

BisAP can also be referred to by the name 4,4'-(1-phenylethylidene)bisphenol; 1,1-bis(4-hydroxyphenyl)-1-phenylethane, and has the CAS # 1571-75-1.

The term "PPPBP" as used herein refers to a compound having a structure represented by the formula:

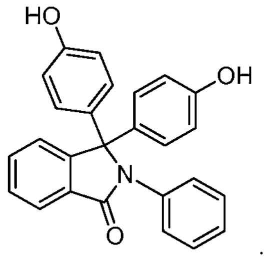

PPPBP can also be referred to by the following names: 2-Phenyl-3,3-bis(4-hydroxyphenyl)phthalimidine; N-Phenyl-3,3 -bis(4-hydroxyphenyl)phthalimidine; 3,3 -bis(4-hydroxyphenyl)-2-phenylisoindolin-1-one; 3,3-bis(4-hydroxyphenyl)-2-phenyl-2,3-dihydro-1H-isoindol-1-one. PPPBP has the CAS # 6607-41-6.

The terms "BisAP polycarbonate" or "bisphenol AP-PC," which can be used interchangeably, as used herein refers to a polycarbonate copolymer comprising repeating carbonate units derived from 4,4'-(1-phenylethylidene)bisphenol or BisAP and at least one other dihydroxy monomer such as a bisphenol. For example, BisAP-PC can be a polycarbonate copolymer comprising BisAP and bisphenol A monomer units.

The term "PPPBP -PC" refers to a polycarbonate copolymer comprising repeating carbonate units derived from PPPBP and at least one other dihydroxy monomer such as a bisphenol A. For example, PPPBP-PC can be a polycarbonate copolymer comprising PPPBP and bisphenol A monomer units.

The PPPBP-PC copolymer component can be present in the thermoplastic composition in the range of from at least about 45 wt % to about 85 wt %, including the exemplary amounts of about 45 wt%, about 50 wt%, about 55 wt%, about 60 wt%, about 65 wt%, about 70 wt%, about 75 wt%, about 80 wt%, and about 85 wt%, or within any range of amount derived from any two of the above states values, e.g., from about 45-55 wt%, from about 45-60 wt%, about 60-85 wt%, about 70-85 wt%, about 75-85 wt. % or from about 80-85 wt. % In some examples, the PPPBP-PC copolymer component can be present in the thermoplastic composition in the range of from at least about 45 wt. % to 85 wt. %, including the exemplary amounts of 45 wt%, 50 wt%, 55 wt%, 60 wt%, 65 wt%, 70 wt%, 75 wt%, 80 wt%, and 85 wt%, or within any range of amount derived from any two of the above states values, e.g., from 45-55 wt%, 45-60 wt%, 60-85 wt%, 70-85 wt%, 75-85 wt. %or from 80-85 wt. % In certain aspects, at least 45 wt. % may allow the composition to reach a heat distortion temperature of at least 150 °C, which may be beneficial for the thermoplastic composition's optimal application performance. For optimal performance within the thermoplastic composition, 50-55 wt%, or about 50 wt. % to about 55 wt. %, is preferred.

In another aspect, the PPPBP-polycarbonate copolymer may have a weight average molecular weight of greater than 15,000, comprising more than 15 mole percent structural units derived from 2-aryl-3, 3-bis (4-hydroxyaryl) phthalimide (shown below):

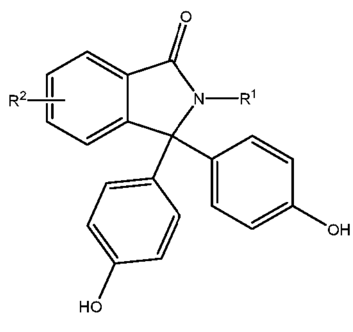

In this aspect, $R^1$ is selected from the group consisting of aryl groups having 6 to 25 carbon atoms and aralkyl groups having 7-25 carbon atoms, and R2 is selected from the group consisting of a hydrogen, a hydrocarbyl group, and a halogen; and the remainder of the structural units derived from 2, 2-bis (4-hydroxyphenyl) propane (bisphenol A).The preceding describes what can be known as a high heat polymer. Such a polymer may be defined by its heat distortion temperature above 150 degrees Celsius. It may also be characterized based on the chemical structure shown above. Finally, a high heat polymer may be characterized by its general application in high heat. That is, the polymer's chemical structure allowing the overall composition to withstand temperatures above 150 °C defines the "high heat" nature of the element.

### B. Aromatic Polycarbonate Polymer Component

The term polycarbonate as used herein is not intended to refer to only a specific polycarbonate or group of polycarbonates, but rather refers to the any one of the class of compounds containing a repeating chain of carbonate groups of the general formula (II) below:

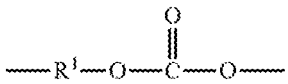 (II)

wherein at least 60 percent of the total number of $R^1$ groups comprise aromatic moieties and the balance thereof comprise aliphatic, alicyclic, or aromatic moieties.

In one aspect, a polycarbonate material can include any one or more of those polycarbonate materials disclosed and described in U.S. Pat. No. 7,786,246, which is hereby incorporated by reference in its entirety for the specific purpose of disclosing various polycarbonate thermoplastic compositions and methods for manufacture of same.

The polycarbonate polymer component can comprise copolymers comprising carbonate units and other types of polymer units, including ester units, and combinations comprising at least one of homopolycarbonates and copolycarbonates. An exemplary polycarbonate copolymer of this type is the addition of XHT.

Representative polycarbonates include those exemplified within this disclosure.

The polycarbonate can, in various aspects, be prepared by a melt polymerization process. Such processes are well known and need not be described here.

The polycarbonate component can be present in the thermoplastic composition in a range bounded at the lower end by a value of from about 5 wt % to about 55 wt %, or from 5 wt. % to 55 wt. %, including the exemplary amounts of 10 wt%, 15 wt%, 20 wt%, 25 wt%, 30 wt%, 35 wt%, 40 wt%, 45 wt%, 50 wt%, and 55 wt%, or within any range of amount derived from any two of the above states values, e.g., from 5-20 wt%, 20-50 wt%, 30-45 wt%, 35-40 wt%, or from 50-55 wt. % In further examples, The polycarbonate component can be present in the thermoplastic composition in a range bounded at the lower end by a value of from about 5 wt. % to about 55 wt. %, including the exemplary amounts of about 10 wt. %, about 15 wt. %, about 20 wt. %, about 25 wt. %, about 30 wt. %, about 35 wt. %, about 40 wt%, about 45 wt%, about 50 wt%, and about 54 wt%, or within any range of amount derived from any two of the above states values, e.g., from about 5-20 wt. %, about 20-50 wt. %, about 30-45 wt%, about 35-40 wt%, or from about 50-55 wt. %.Notably, 10-15 wt%, or from about 10 wt. % to about 15 wt. %, polycarbonate is preferred for optimal performance within the thermoplastic composition.

In aspects where the polycarbonate component comprises a blend of two or more polycarbonate polymers, it should be understood that each respect polycarbonate polymer present within the polycarbonate component can be present in any desired amount relative to the total weight percentage of the polycarbonate polymer component.

### C. Polycarbonate - Siloxane Copolymer

The disclosed thermoplastic compositions further comprise a polycarbonate-siloxane block copolymer component. As used herein, the term polycarbonate-siloxane copolymer is equivalent to LEXAN™ EXL-PC (polycarbonate) (commercially available from SABIC™). Certain compositions are free of, or substantially free of, or free of polycarbonate-siloxane copolymer..

Representative polycarbonate-siloxane copolymers include those exemplified within this specification. Non-limiting examples of polysiloxane-polycarbonate copolymers can comprise various copolymers available from SABIC Innovative plastics. In an aspect, the polysiloxane-polycarbonate copolymer can contain 6 % by weight polysiloxane content based upon the total weight of the polysiloxane-polycarbonate copolymer. In various aspects, the 6 % by weight polysiloxane block copolymer can have a weight average molecular weight (Mw) of from about 23,000 to 24,000 Daltons using gel permeation chromatography with a bisphenol A polycarbonate absolute molecular weight standard. In another example, the polysiloxane-polycarbonate block can comprise 20 % by weight polysiloxane based upon the total weight of the polysiloxane block copolymer. For example, an appropriate polysiloxane-polycarbonate copolymer can be a bisphenol A polysiloxane-polycarbonate copolymer end-capped with para-cumyl phenol (PCP) and having a 20 % polysiloxane content (see C9030P, commercially available from SABIC™ as EXL C9030P).

In certain aspects, the at least one polycarbonate-siloxane copolymer is present in an amount in a range bounded at the lower end by a value of from about 0.1 wt%, 1 wt. % 2 wt%, 3 wt %, 4 wt. % or 5 wt%, or from about 0.1 wt%, about 1 wt%, about 2 wt%, about 3 wt. %, about 4 wt. % or about 5 wt. %, and at the upper end by a value of about 15 wt%, 14 wt%, 13 wt%, 12 wt%, 11 wt%, or 10 wt%, or of about 15 wt%, about 14 wt%, about 13 wt%, about 12 wt%, about 11 wt%, or about 10 wt. %

In some aspects, two or more polycarbonate-siloxane copolymers may be used. For example, in some embodiments, blends of end-capped and hydroxy terminated materials may be used. In other embodiments, blends of similar chemistries having different proportions of siloxane may also be used.

The disclosed polycarbonate-siloxane copolymer block copolymers can also be end-capped. For example, according to aspects of the disclosure, a polycarbonate-siloxane copolymer block copolymer can be end capped with p-cumyl-phenol.

The polycarbonate-siloxane copolymer component can be present in the thermoplastic composition in any desired amount within the ranges prescribed herein, including exemplary amounts of 1 wt%, 2 wt%, 5 wt%, 7 wt%, 10 wt%, or 15wt%, or about 1 wt. %, about 2 wt. %, about 5 wt. %, about 7 wt. %, about 10 wt. %, or about 15 wt. %, or within any range bounded by these values. Notably, better mechanical performance may be achieved with a greater amount of polycarbonate-siloxane copolymer. Greater than 5 wt. % will enhance the mechanical performance of the thermoplastic composition. For optimal performance, 8-10 wt. %, or from about 8 to about 10 wt. % polycarbonate-siloxane copolymer is preferred.

### D. Laser Direct Structuring Additive

The disclosed thermoplastic compositions further comprise a conventional laser direct structuring additive additive, selected such that, after activating with a laser, a conductive path can be formed by a subsequent standard metallization or plating process - i.e., when the LDS additive is exposed to a laser, elemental metal is released or activated which act as nuclei for the crystal growth during a subsequent metallization or plating process, such as a copper plating, gold plating, nickel plating, silver plating, zinc plating, tin plating or the like.

Representative LDS additives include those exemplified within the Examples section of this specification. Exemplary and non-limiting examples of commercially available laser direct structuring additives include the Black 1G pigment black 28 commercially available from The Shepherd Color company. The Black 1G pigment black 28 comprises copper chromite and has a spinel type crystal structure. Another exemplary commercially available laser direct structuring additive is PK3095 black pigment, commercially available from Ferro Corp., USA. The PK3095, for example, comprises chromium oxides ($Cr_2O_3$, $Cr_2O_4^{2-}$, $Cr_2O_7^{2-}$) and oxides of copper (CuO), as determined using X-ray photoelectron spectroscopy XPS. The PK3095 black pigment also has a spinel type crystal structure.

In some aspects, at least one laser direct structuring additive is present in an amount in the composition in a range having a lower boundary of 0.5 wt%, 1 wt%, 2 wt%, 3 wt%, 4 wt%, or 5 wt. % and an upper boundary of 10 wt%, 9 wt%, 8 wt%, 7 wt%, or 6 wt%, e.g., in a range of from 7 to 9 wt%, from 4 to 8 wt %, or an amount of about 7 wt. % In further aspects, at least one laser direct structuring additive is present in an amount in the composition in a range having a lower boundary of about 0.5 wt. %, about 1 wt. %, about 2 wt. %, about 3 wt. %, about 4 wt. %, about 5 wt. %, about 6 wt. %, or about 7 wt. % and an upper boundary of about 10 wt. %, about 9 wt. %, about 8 wt. %, about 7 wt. %, or about 6 wt. %, *e.g.,* in a range of from about 7 to about 9 wt. %, from about 4 to about 8 wt. %, or an amount of about 7 wt. %. For optimal performance, LDS additive between 5-8 wt%, or from about 5 wt. % to about 8 wt. %, is preferred.

### E. Optional Thermoplastic Composition Additives

The disclosed thermoplastic compositions may further comprise at least one oligomeric siloxane additive. While conventional laser direct structuring additives can be detrimental to the base thermoplastic resin composition, and adversely affect its properties, the presence of the siloxane additive mitigates these adverse effects providing thermoplastic compositions that are suitable for use in laser direct structuring while also maintaining or exhibiting desired performance properties.

According to aspects of the disclosure, the oligomeric siloxane additive may modify the surface pH of the LDS additive, or together, the siloxane and LDS additives may alter the surface pH of the filler composition. In another aspect, the filler composition comprises an amino siloxane additive and a copper chromate oxide that forms a chemical bond.

In some aspects, the siloxane additive is added directly during the extrusion process along with the polycarbonate polymer, the laser direct structuring additive, and any additional ingredients. In other aspects, the laser direct structuring additive may be pre-treated with a siloxane additive. Alternatively, the laser direct structuring additive may be treated with a coupling agent and/or compatibilizer and then be fed into the extrusion as the second step of the process. Either modification process or extrusion process may, for example, be performed at room temperature or 23°C.

The siloxane additive can be polymeric or oligomeric in nature or, alternatively, can be monomeric or a single compound. The at least one filler composition comprises at least one siloxane additive. The at least one siloxane additive may, for example, comprise functional groups selected from amino groups, phenyl groups, and epoxy groups. Non-limiting examples of siloxane additives may include epoxysilane, aminosilane, aminosiloxane, or phenylsiloxane. In one aspect, the siloxane additive comprises an aminosiloxane. In another aspect, the siloxane additive comprises a phenyl siloxane.

The disclosed thermoplastic compositions can optionally comprise one or more additives conventionally used in the manufacture of molded thermoplastic parts with the proviso that the optional additives do not adversely affect the desired properties of the resulting composition. Mixtures of optional additives can also be used. Such additives may be mixed at a suitable time during the mixing of the components for forming the composite mixture. For example, the disclosed thermoplastic compositions can comprise one or more fillers, plasticizers, stabilizers, anti-static agents, flame-retardants, impact modifiers, colorant, antioxidant, and/or mold release agents. In one aspect, the composition further comprises one or more optional additives selected from an antioxidant, flame retardant, inorganic filler, and stabilizer.

Exemplary heat stabilizers include, for example, organo phosphites; phosphonates; phosphates, or combinations including at least one of the foregoing heat stabilizers. Heat stabilizers are generally used in amounts of from 0.01 to 0.5 parts by weight (pbw), or from about 0.01 to about 0.5 pbw, based on 100 parts by weight of the total composition, excluding any filler.

Exemplary antioxidants include, for example, organophosphites; alkylated monophenols or polyphenols; alkylated reaction products of polyphenols with dienes; butylated reaction products of para-cresol or dicyclopentadiene; alkylated hydroquinones; hydroxylated thiodiphenyl ethers; alkylidene-bisphenols; benzyl compounds; amides or esters of beta-(3,5-di-tert-butyl-4-hydroxyphenyl)-propionic acid; esters of beta-(5-tert-butyl-4-hydroxy-3-methylphenyl)-propionic acid with monohydric or polyhydric alcohols; esters of thioalkyl or thioaryl compounds; or combinations including at least one of the foregoing antioxidants. Antioxidants are generally used in amounts of from 0.01 to 0.5 parts by weight(pbw), or from about 0.01 to about 0.5 pbw, based on 100 parts by weight of the total composition, excluding any filler.

The disclosed thermoplastic compositions can further comprise an optional filler, such as, for example, an inorganic filler or reinforcing agent. The specific composition of filler, if present, can vary, provided that the filler is chemically compatible with the remaining components of the thermoplastic composition. In one aspect, the thermoplastic composition comprises a mineral filler such as talc.

In another aspect, an exemplary filler can comprise metal silicates and silica powders; boron-containing; oxides of aluminum (Al), magnesium (Mg), or titanium (Ti); anhydrous or hydrated calcium sulfate; wollastonite; hollow and/or solid glass spheres; kaolin; single crystal metallic or inorganic fibers or "whiskers"; glass or carbon fibers (including continuous and chopped fibers, including flat glass fibers), ; sulfides of molybdenum (Mo) or zinc (Zn); barium compounds; metals and metal oxides; flaked fillers; fibrous fillers; short inorganic fibers reinforcing organic fibrous fillers formed from organic polymers capable of forming fibers (e.g., polyether ether ketone (PEEK), polyetherimides (PEI), polytetrafluoroethylene (PTFE), polyphenylene sulfide (PPS)); and fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

Exemplary light stabilizers include, for example, benzotriazoles, 2-(2-hydroxy-5-tert-octylphenyl)-benzotriazole and 2-hydroxy-4-n-octoxy benzophenone or a combination thereof. Light stabilizers are generally used in amounts of from 0.1 to 1.0 pbw or from about 0.1 to about 1.0 pbw, based on 100 parts by weight of the total composition, excluding any filler.

Exemplary plasticizers include, for example, phthalic acid esters such as dioctyl-4,5-epoxy-hexahydrophthalate, tris-(octoxycarbonylethyl)isocyanurate, tristearin, epoxidized soybean oil or the like, or combinations including at least one of the foregoing plasticizers. Plasticizers are generally used in amounts of from 0.5 to 3.0 pbw , or from about 0.5 to about 3 pbw, based on 100 parts by weight of the total composition, excluding any filler.

Exemplary antistatic agents include, for example, glycerol monostearate, sodium stearyl sulfonate, sodium dodecylbenzenesulfonate or the like, or combinations of the foregoing antistatic agents. In one aspect, carbon fibers, carbon nanofibers, carbon nanotubes, carbon black, or any combination of the foregoing may be used in a polymeric resin containing chemical antistatic agents to render the composition electrostatically dissipative.

Exemplary mold releasing agents or lubricants include for example stearates (including metal or alkyl stearates) or waxes. When used, mold releasing agents are generally used in amounts of from 0.1 to 1.0 pbw or from about 0.1 to about 1 pbw, or from 0.1 to 5 pbw or from about 0.1 pbw to about 5 pbw, based on 100 parts by weight of the total composition, excluding any filler.

The disclosed thermoplastic compositions can optionally further comprise a flame retardant additive. Where present, the flame retardant additive can comprise one or more phosphate-containing or a halogen-containing material. Flame retardant additives are generally commercially available.

Additionally, materials to improve flow and other properties may be added to the composition, such as low molecular weight hydrocarbon resins. Particularly useful classes of low molecular weight hydrocarbon resins are those derived from petroleum $C_5$ to $C_9$ feedstock that are derived from unsaturated $C_5$ to $C_9$ monomers obtained from petroleum cracking, for example $C_{5-12}$ olefins or diolefins or aromatic hydrocarbons

## II. Methods of Manufacture

In one aspect, the method comprises forming a molded part from the formed blend composition. In another

aspect, the method further comprises subjecting the molded part to a laser direct structuring process.

In a further aspect, the disclosure relates to a method for making the thermoplastic compositions described herein, the method comprising forming a blended composition comprising This disclosure includes thermoplastic compositions, each comprising (a) from 5 wt. % to 54 wt. %, or from about 5 wt. % to about 55 wt. % of at least one aromatic polycarbonate; (b) from 45 wt. % to 85 wt. %, or from about 45 wt. % to about 85 wt. % of at least one high heat PPPBP-polycarbonate copolymer; (c) from greater than 0 wt. % to 15 wt. %, or from greater than 0 wt. % to about 15 wt. % of at least one polycarbonate-siloxane copolymer; and (d) from 0.5 wt. % to 10 wt. %, or from about 0.5 wt. % to about 10 wt. % of at least one laser direct structuring additive; wherein the laser direct structuring additive is a filler selected from a metal oxide; a metal oxide coated filler; or a combination thereof; wherein the composition is capable of being plated after being activated using a laser; and wherein the composition has a heat distortion temperature higher than 150 °C, as determined by ASTM D 648.

In another aspect, the method involves three steps: 1) injection molding, 2) laser structuring, and optionally 3) metallizing the laser structured composition.

In a further aspect, during the injection molding step, the laser direct structuring additive and siloxane additive may be mixed with the polycarbonate polymer and the one polycarbonate - siloxane copolymer. In another aspect, the blend composition further comprises one or more optional additives selected from an antioxidant, flame retardant, inorganic filler, and stabilizer. In a still further aspect, single shot injection molding can be used to produce the parts or articles to be laser structured. In at least one aspect, the thermoplastic composition may be mixed at this step and used in the LDS process. In another aspect, additional ingredients may be added to the thermoplastic composition after this step.

The polycarbonate thermoplastic compositions can be manufactured by various methods known in the art. For example, powdered polycarbonate, and other optional components are first blended, optionally with any fillers, in a high speed mixer or by hand mixing. The blend is then fed into the throat of a twin-screw extruder via a hopper. Alternatively, at least one of the components can be incorporated into the composition by feeding it directly into the extruder at the throat and/or downstream through a sidestuffer, or by being compounded into a master batch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

In a further aspect, during the laser structuring step, a laser is used to form a conductive path during the laser structuring step. The laser structuring step may comprise laser direct structuring or laser etching. In a further aspect, laser etching is carried out to provide an activated surface. In a further aspect, at least one laser beam draws at least one pattern on the surface of the thermoplastic composition during the laser structuring step. In another aspect, the employed filler composition may release at least one metallic nucleus. The at least one metallic nucleus that has been released may act as a catalyst for reductive copper (or other metal) plating process.

The laser etching is carried out at 1 Watt (W) to 10 W, or from about 1 Watt to about 10 Watt, power with (a) a frequency from 30 kilohertz (kHz) to 110 kHz, or from about 30 kHz to about 110 kHz, and a speed of 1 meters per second (m/s) to 5 m/s, or from about 1 m/s to about 5 m/s; or (b) a frequency from 40 kHz to 100 kHz, or from about 40 kHz to about 100 kHz, and a speed of 2 m/s to 4 m/s or from about 2 m/s to about 4 m/s. In another aspect, laser etching is carried out at 3.5 W or about 3.5 Watt power with a frequency of 40 kHz or about 40 kHz and a speed of 2 m/s or about 2 m/s.

In a further aspect, the LDS process may result in formation of a rough surface. The rough surface may entangle the copper plate with the polymer matrix in the thermoplastic composition providing adhesion between the copper plate and the thermoplastic composition.

The metallizing step can, in various aspects, be performed using conventional electroless or electrolytic plating techniques (e.g., using an electroless copper plating bath). In a still further aspect, the metallization can comprise the steps: a) cleaning the etched surface; b) additive build-up of tracks; and c) plating.

### III. Articles of Manufacture

Shaped, formed, or molded articles including the thermoplastic compositions are also provided. The thermoplastic compositions can be molded into useful shaped articles by a variety of means such as injection molding, extrusion, rotational molding, blow molding and thermoforming to form articles such as, for example, personal computers, notebook and portable computers, cell phone antennas and other such communications equipment, medical applications, RFID applications, automotive applications, and the like.

The blended thermoplastic compositions, or compounds, disclosed herein provide robust plating performance while maintaining good mechanical properties, for example, a notched Izod impact energy at 23°C or at -20°C as described elsewhere herein. Evaluation of the mechanical properties can be performed through various tests, such as Izod test, Charpy test, Gardner test, etc., according to several standards (e.g., ASTM D 256). Unless specified to the contrary, all test standards described herein refer to the most recent standard in effect at the time of filing of this application.

In several aspects, the LDS compounds include a fixed loading amount of an LDS additive, such as copper chromium oxide, and varying amounts of thermoplastic base resins. In such aspects, fixed loading amounts of a stabilizer, an antioxidant, and a mold release agent were maintained in the LDS compounds.

In one aspect, the article comprises the product of extrusion molding or injection molding a composition comprising: (a) from 5 wt. % to 55 wt. % or from about 5 wt. % to about 55 wt. % of at least one aromatic polycarbonate; (b) from 45 wt. % to 85 wt. % or from about 45 wt. % to about 85 wt. % of at least one high heat PPPBP-polycarbonate copolymer; (c) from 0 wt. % to 15 wt. % or from greater than 0 wt. % to about 15 wt. % of at least one polycarbonate-siloxane copolymer; and (d) from 0.5 wt. % to 10 wt. % or from about 0.5 wt. % to about 10 wt. % of at least one laser direct structuring additive; wherein the laser direct structuring additive is a filler selected from a metal oxide; a metal oxide coated filler; or a combination thereof; wherein the composition is capable of being plated after being activated using a laser; and wherein the composition has a heat distortion temperature higher than 150 °C, as determined by ASTM D 648.

This molding includes a dramatically increased heat resistance as a result of the addition of XHT copolymer, thus enabling the composition to meet the requirements of the high temperature processes it undergoes.

Although the impact strength is negatively affected by the addition of LEXAN™ XHT resin compolymer, the addition of the polycarbonate-siloxane copolymer recovers this property and retains a high HDT performance temperature.

In a further aspect, the molded article further comprises a conductive path formed by activation with a laser. In a yet further aspect, the article further comprises a metal layer plated onto the conductive path.

In various aspects, the thermoplastic composition may be used in the field of electronics. In a further aspect, non-limiting examples of fields which may use 3D MIDs, LDS process, or thermoplastic composition include electrical, electro-mechanical, Radio Frequency (RF) technology, telecommunication, automotive, aviation, medical, sensor, military, and security.

In one aspect, molded articles according to the present disclosure can be used to produce a device in one or more of the foregoing fields. Such devices which may use three dimensional (3D) molded interconnect devices (MIDs), LDS processes, or thermoplastic compositions according to the present disclosure include, for example, computer devices, household appliances, decoration devices, electromagnetic interference devices, printed circuits, Wi-Fi devices, Bluetooth devices, global positioning system (GPS) devices, cellular antenna devices, smart phone devices, automotive devices, military devices, aerospace devices, medical devices, such as hearing aids, sensor devices, security devices, shielding devices, radio frequency (RF) antenna devices, or radio frequency identification (RFID) devices.

In a further aspect, the resulting disclosed compositions can be used to provide any desired shaped, formed, or molded articles. For example, the disclosed thermoplastic compositions may be molded into useful shaped articles by a variety of means such as injection molding, extrusion, rotational molding, blow molding and thermoforming. As noted above, the disclosed thermoplastic compositions are particularly well suited for use in the manufacture of electronic components and devices. As such, according to some aspects, the disclosed thermoplastic compositions can be used to form articles such as printed circuit board carriers, burn in test sockets, flex brackets for hard disk drives, and the like.

## EXAMPLES

The following examples are put forth so as to provide those of ordinary skill in the art with a complete disclosure and description of how the methods, devices, and systems disclosed and claimed herein are made and evaluated, and are intended to be purely exemplary and are not intended to limit the disclosure. Best efforts have been made to ensure accuracy with respect to numbers (e.g., amounts, temperature, etc.), but some errors and deviations should be accounted for. Unless indicated otherwise, parts are parts by weight, temperature is in degrees Celsius (°C) or is at ambient temperature, and pressure is at or near atmospheric.

Molded articles were prepared for analysis as described herein. Table 1 describes extrusion conditions by which PC based LDS composites including modified PC copolymer PPPBP (LEXAN™ XHT).

**Table 1. Extrusion parameters**

| Parameters | Units | Value |
|---|---|---|
| Compounder Type | - | Toshiba™ TEM-37BS |
| Barrel size | millimeters (mm) | 1500 |
| Die | mm | 3 |
| Feed (Zone 0) Temp | NONE | - |
| Zone 1 Temp | °C | 50 |

(continued)

| Parameters | Units | Value |
|---|---|---|
| Zone 2 Temp | °C | 100 |
| Zone 3 Temp | °C | 290 |
| Zone 4 Temp | °C | 295 |
| Zone 5 Temp | °C | 298 |
| Zone 6 Temp | °C | 300 |
| Zone 7 Temp | °C | 301 |
| Zone 8 Temp | °C | 302 |
| Zone 9 Temp | °C | 303 |
| Zone 10 Temp | °C | 305 |
| Zone 11 Temp | °C | 305 |
| Die Temp | °C | 305 |
| Screw Speed | rpm (revolutions per minute) | 300 |
| Throughput | kg/hr (kilograms per hour) | 30 |
| Vacuum 1 | MPa (megapascals) | -0.08 |
| Side Feeder 1 speed | rpm | 250 |
| Melt temperature | °C | 305 |

The molding process was carried out in a range of from 300 to 310°C with an injection speed of 50 millimeters per minute (mm/min), and an injection pressure of 1000 kilogram force per square centimeter (kgf/$cm^2$). The mold temperature was kept at 80°C. **Table 2** describes the molding conditions of the polycarbonate based LDS composites.

**Table 2. Molding conditions.**

| Parameters | Units | Values |
|---|---|---|
| Cnd: Pre-drying time | Hours | 4 |
| Cnd: Pre-drying temp. | °C | 135 |
| Molding Machine | NONE | FANUC |
| Mold Type (insert) | NONE | ASTM family |
| Hopper temperature | °C | 50 |
| Zone 1 temp | °C | 300 |
| Zone 2 temp | °C | 305 |
| Zone 3 temp | °C | 310 |
| Nozzle temp | °C | 310 |
| Mold temp | °C | 80 |
| Screw speed | rpm | 100 |
| Back pressure | kgf/$cm^2$ | 60 |
| Cooling time | seconds (sec) | 15 |
| Injection speed | millimeter per second (mm/s) | 50 |
| Holding pressure | kgf/$cm^2$ | 600 |
| Max. injection pressure | kgf/$cm^2$ | 1000 |

The formulations all contain primary antioxidant and secondary antioxidants that are well known to those known in the arts.

**Table 3** below describes the various materials that may be used in examples and formulations of the PC composites where column 1 is a control, column 2 includes copolymer PPPBP/BPA(XHT,64percent by weight of total compostion), and column 3 includes copolymer PPPBP/BPA + PC/Siloxane copolymer (16 percent by weight).

**Table 3. Formulation of the examples**

| Item Code | Item Description | Unit | 1 - Control | 2 - XHT | 3-PPPBP-PC + EXL PC |
|---|---|---|---|---|---|
| C017 | PCP 1300; Polycarbonate derived from bisphenol A (22,000 Mw) | % | 45.5 | 13 | - |
| C023A | 100 grade PCP; polycarbonate from SABIC™ derived from bisphenol A (30,000 Mw) | % | 30 | 13 | 10 |
| C9030P | 20% PC/Siloxane Copolymer, paracumyl phenol (PCP) endcapped; poly(bisphenol A carbonate) - polydimethylsiloxane block copolymer | % | 10 | - | 16 |
| C893525 | PPPBP/BPA copolycarbonate (35 mol% PPPBP; 25,000 Mw) | % | - | 64 | 64 |
| F594825 | Copper Chromite Black Spinel; Black 1G | % | 6 | 6 | 6 |
| F527 | Hindered Phenol Anti-oxidant | % | 0.1 | 0.1 | 0.1 |
| F538 | Pentaerythritol Tetrastearate (PETS) | % | 0.3 | 0.3 | 0.3 |
| F542 | Phosphite Stabilizer; tris(2,4-di-tert-butylphenyl) phosphite; antioxidant | % | 0.1 | 0.1 | 0.1 |
| F293074 | MD1024 phenolic antioxidant | % | 0.1 | 0.1 | 0.1 |
| 4468 | Joncryl ADR-4468; compatibilizer | % | 0.2 | 0.2 | 0.2 |
| F502815 | Fine Talc | % | 3 | 3 | 3 |
| F8260 | Mono Zinc Phosphate (MZP) | % | 0.2 | 0.2 | 0.2 |
| F722224 | SAN encapsulated PTFE | % | 0.5 | - | - |
| F405879 | Fushimi FP-110; cyclic phenoxyphosphazene; flame retardant | % | 4 | - | - |
| | Formulation total | | 100 | 100 | 100 |

Tests were all conducted in accordance with ASTM, ISO standards, according to: melt volume rate (MVR) (ASTM D 1238); Density, grams per cubic centimeter(ISO 1183); Notched Izod impact strength (ASTM D 256); Tensile testing, 5 mm/min (ASTM D 638); Flexural testing, 1.27 mm/min (ASTM D 790); heat deflection temperature HDT, 1.82 MPa, 3.2 mm thickness bar (ASTM D 648); Dielectric constant and dielectric loss (ASTM D 150).

Tensile properties (modulus, strength, and strength at yield) were measured on 3.2 mm bars in accordance with ISO 527 using sample bars prepared in accordance with ISO 3167 Type 1A multipurpose specimen standards. Tensile strength (for either at break or at yield, in units of megapascals, MPa), tensile modulus (ion units of gigaPascals, GPa), and tensile elongation (%) are reported at break.

Flexural properties (modulus and strength) were measured using 3.2 mm bars in accordance with ISO 178. Flexural strength (in units of MPa) and flexural modulus (in units of GPa) are reported at yield.

The notched Izod impact ("NII") test was carried out on 80 mm x 10 mm x 4 mm molded samples (bars) according to ISO180 at 23 °C. Test samples were conditioned in ASTM standard conditions of 23 °C and 55% relative humidity for 48 hours and then were evaluated. NII was determined using a Ceast™ Impact Tester. **Table 4** describes the tests conducted showing effects of PPPBP-PC (XHT) as well as that of XHT with added PC/Siloxane copolymer (EXL PC).

**Table 4: Examples showing effect of PPPBP-PC (XHT) copolymer**

| Test Description | | 1-Control | 2 - PPPBP-PC | 3 - PPPBP-PC + EXL PC |
|---|---|---|---|---|
| HDT, 1.82 MPa, 3.2 mm | °C | 114 | 156 | 154 |
| Density | g/cc | 1.28 | 1.29 | 1.28 |
| Dielectric Constant, 1.1 gigahertz GHz | | 2.91 | 2.95 | 2.97 |
| Dissipation Factor, 1.1 GHz | | 0.0069 | 0.0062 | 0.0068 |
| Tensile Modulus - Avg | | 2600 | 3050 | 2700 |
| Tensile Stress at Break-Avg | MPa | 55.3 | 75.7 | 66 |
| Tensile Elongation at Break-Avg | % | 70 | 10.2 | 11.1 |
| Flexural Modulus - Avg | MPa | 2450 | 2850 | 2580 |
| Flexural Stress@Break-Avg | MPa | 89 | 110 | 97 |
| Notched IZOD Impact Strength-Avg | MPa | 716 | 61 | 135 |
| Plating Index-Avg (determined via SABIC™ internal method) | | 1.12 | 0.82 | 0.86 |

It will be apparent to those skilled in the art that various modifications and variations can be made in the present disclosure without departing from the scope or spirit of the disclosure. Other aspects of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

**1.** A thermoplastic composition comprising:

(a) from 5 wt. % to 55 wt. % of at least one aromatic polycarbonate;
(b) from 45 wt. % to 85 wt. % of at least one high heat resistance 3,3-bis(4-hydroxyphenyl)-2-phenylisoindolin-1-one (PPPBP)-polycarbonate copolymer;
(c) from greater than 0 wt. % to 15 wt. % of at least one polycarbonate-siloxane copolymer; and
(d) from 0.5 wt. % to 10 wt. % of at least one laser direct structuring additive, wherein

the laser direct structuring additive is a filler selected from a metal oxide, a metal oxide coated filler, or a combination thereof,
the thermoplastic composition is capable of being plated after being activated using a laser, and
the composition has a heat distortion temperature higher than 150 degrees Celsius (°C), as determined by ASTM D 648.

**2.** The thermoplastic composition of claim 1, wherein the high heat resistance 3,3-bis(4-hydroxyphenyl)-2-phenylisoindolin-1-one (PPPBP)-polycarbonate copolymer has a weight average molecular weight of greater than 15,000, comprising more than 15 mole percent structural units derived from 2-aryl-3, 3-bis (4-hydroxyaryl) phthalimide (Formula I):

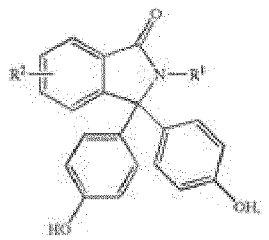

(I)

wherein $R^1$ is selected from the group consisting of aryl groups having 6 to 25 carbon atoms and aralkyl groups having 7-25 carbon atoms, and R2 is selected from the group consisting of a hydrogen, a hydrocarbyl group, and a halogen; and the remainder of the structural units derived from 2, 2-bis (4-hydroxyphenyl) propane (bisphenol A).

**3.** The thermoplastic composition of claim 1, wherein the inclusion of high heat resistance PPPBP-polycarbonate copolymer in said amount raises the heat distortion temperature of the overall thermoplastic composition between 5% and 30% compared to the heat distortion temperature of the thermoplastic composition without the 3,3-bis(4-hydroxyphenyl)-2-phenylisoindolin-1-one (PPPBP)-polycarbonate copolymer.

**4.** The thermoplastic composition of claim 1, wherein the inclusion of high heat resistance 3,3-bis(4-hydroxyphenyl)-2-phenylisoindolin-1-one (PPPBP)-polycarbonate copolymer in said amount raises the heat distortion temperature of the overall thermoplastic composition by at least 5%, but no more than 25% compared to the heat distortion temperature of the thermoplastic composition without the high heat resistance PPPBP-polycarbonate copolymer.

**5.** The thermoplastic composition of claim 1, wherein the inclusion of high heat resistance 3,3-bis(4-hydroxyphenyl)-2-phenylisoindolin-1-one (PPPBP)-polycarbonate copolymer in said amount raises the heat distortion temperature of the overall thermoplastic composition by at least 5%, but no more than 20% compared to the heat distortion temperature of the thermoplastic composition without the high heat resistance 3,3-bis(4-hydroxyphenyl)-2-phenylisoindolin-1-one (PPPBP)-polycarbonate copolymer.

**6.** The thermoplastic composition of claim 1, wherein the inclusion of high heat resistance 3,3-bis(4-hydroxyphenyl)-2-phenylisoindolin-1-one (PPPBP)-polycarbonate copolymer in said amount raises the heat distortion temperature of the overall thermoplastic composition by at least 5%, but no more than 15% compared to the heat distortion temperature of the thermoplastic composition without the high heat resistance 3,3-bis(4-hydroxyphenyl)-2-phenylisoindolin-1-one (PPPBP)-polycarbonate copolymer.

**7.** The thermoplastic composition of claim 1, wherein the inclusion of high heat resistance 3,3-bis(4-hydroxyphenyl)-2-phenylisoindolin-1-one (PPPBP)-polycarbonate copolymer in said amount raises the heat distortion temperature of the overall thermoplastic composition by at least 5%, but no more than 10% compared to the heat distortion temperature of the thermoplastic composition without the high heat resistance PPPBP-polycarbonate copolymer.

**8.** A thermoplastic composition comprising:

(a) from 5 wt. % to 55 wt. % of a polycarbonate component;
(b) from 44.5 wt. % to 85 wt. % of a 3,3-bis(4-hydroxyphenyl)-2-phenylisoindolin-1-one (PPPBP)-polycarbonate copolymer; and
(c) from 0.5 wt. % to 10 wt. % of at least one laser direct structuring additive,
wherein

the composition is capable of being plated after being activated using a laser, and
the thermoplastic composition exhibits a heat distortion temperature greater than the heat distortion temperature exhibited by a comparative composition consisting of the substantially same components as the thermoplastic composition, but without the 3,3-bis(4-hydroxyphenyl)-2-phenylisoindolin-1-one (PPPBP)-polycarbonate copolymer.

**9.** The thermoplastic composition of claim 8, wherein the thermoplastic composition comprises a polycarbonate component from 10 wt. % to 15 wt. %.

**10.** The thermoplastic composition of claim 8, wherein the thermoplastic composition comprises a 3,3-bis(4-hydroxyphenyl)-2-phenylisoindolin-1-one (PPPBP)-polycarbonate copolymer from 50 wt. % to 55 wt. %.

**11.** The thermoplastic composition of claim 8, wherein the thermoplastic composition comprises at least one laser direct structuring additive from 5 wt. % to 8 wt. %.

**12.** The thermoplastic composition of claim 8, wherein the thermoplastic composition comprises at least one laser direct structuring additive from 4 wt. % to 10 wt. %.

**13.** The thermoplastic composition of claim 8, wherein the thermoplastic composition comprises at least one laser direct structuring additive from 7 wt. % to 10 wt. %.

**14.** The thermoplastic composition of claim 1, wherein the thermoplastic composition comprises at least one polycarbonate-siloxane copolymer from 8 wt. %to 10 wt. %.

**15.** The thermoplastic composition of claim 1, wherein the thermoplastic composition comprises at least one polycarbonate-siloxane copolymer from 5 wt. %to 12 wt. %.

## Patentansprüche

**1.** Thermoplastische Zusammensetzung, umfassend:

(a) von 5 Gew.-% bis 55 Gew.-% mindestens eines aromatischen Polycarbonats;
(b) von 45 Gew.-% bis 85 Gew.-% mindestens eines hochwärmebeständigen 3,3-Bis(4-hydroxyphenyl)-2-phenylisoindolin-1-on (PPPBP)-Polycarbonat-Copolymers;
(c) von mehr als 0 Gew.-% bis 15 Gew.-% mindestens eines Polycarbonat-Siloxan-Copolymers; und
(d) von 0,5 Gew.-% bis 10 Gew.-% mindestens eines Additivs zur Laserdirektstrukturierung, wobei

das Additiv zur Laserdirektstrukturierung ein Füllstoff ist, der aus einem Metalloxid, einem metalloxidbeschichteten Füllstoff oder einer Kombination davon ausgewählt ist,
die thermoplastische Zusammensetzung nach der Aktivierung mit einem Laser beschichtet werden kann, und
die Zusammensetzung eine Wärmeformbeständigkeitstemperatur von mehr als 150 Grad Celsius (°C) aufweist, bestimmt nach ASTM D 648.

**2.** Thermoplastische Zusammensetzung nach Anspruch 1, wobei das hochwärmebeständige 3,3-Bis(4-hydroxyphenyl)-2-phenylisoindolin-1-on (PPPBP)-Polycarbonat-Copolymer ein gewichtsmittleres Molekulargewicht von mehr als 15.000 aufweist und mehr als 15 Molprozent Struktureinheiten umfasst, die sich von 2-Aryl-3,3-bis(4-hydroxyaryl)phthalimid (Formel I) ableiten:

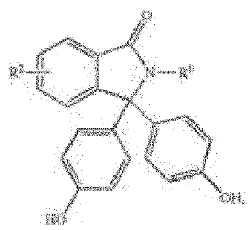
(I)

wobei $R^1$ aus einer Gruppe ausgewählt wird, die aus Arylgruppen mit 6 bis 25 Kohlenstoffatomen und Aralkylgruppen mit 7 bis 25 Kohlenstoffatomen besteht, und $R^2$ aus der Gruppe ausgewählt ist, die aus einem Wasserstoff, einer Kohlenwasserstoffgruppe und einem Halogen besteht; und der Rest der Struktureinheiten sich von 2,2-Bis(4-hydroxyphenyl)propan (Bisphenol A) ableitet.

**3.** Thermoplastische Zusammensetzung nach Anspruch 1, wobei der Einschluss von hochwärmebeständigem PPPBP-Polycarbonat-Copolymer in der genannten Menge die Wärmeformbeständigkeitstemperatur der gesamten thermoplastischen Zusammensetzung zwischen 5 % und 30 % im Vergleich zur Wärmeformbeständigkeitstemperatur der thermoplastischen Zusammensetzung ohne das 3,3-Bis(4-hydroxyphenyl)-2-phenylisoindolin-1-on (PPPBP)-Polycarbonat-Copolymer erhöht.

4. Thermoplastische Zusammensetzung nach Anspruch 1, wobei der Einschluss von hochwärmebeständigem 3,3-Bis(4-hydroxyphenyl)-2-phenylisoindolin-1-on (PPPBP)-Polycarbonat-Copolymer in der genannten Menge die Wärmeformbeständigkeitstemperatur der gesamten thermoplastischen Zusammensetzung um mindestens 5 %, aber nicht mehr als 25 % im Vergleich zur Wärmeformbeständigkeitstemperatur der thermoplastischen Zusammensetzung ohne das hochwärmebeständige PPPBP-Polycarbonat-Copolymer erhöht.

5. Thermoplastische Zusammensetzung nach Anspruch 1, wobei der Einschluss von hochwärmebeständigem 3,3-Bis(4-hydroxyphenyl)-2-phenylisoindolin-1-on (PPPBP)-Polycarbonat-Copolymer in der genannten Menge die Wärmeformbeständigkeitstemperatur der gesamten thermoplastischen Zusammensetzung um mindestens 5 % jedoch nicht mehr als 20 % im Vergleich zur Wärmeformbeständigkeitstemperatur der thermoplastischen Zusammensetzung ohne das hochwärmebeständige 3,3-Bis(4-hydroxyphenyl)-2-phenylisoindolin-1-on (PPPBP)-Polycarbonat-Copolymer erhöht.

6. Thermoplastische Zusammensetzung nach Anspruch 1, wobei der Einschluss von hochwärmebeständigem 3,3-Bis(4-hydroxyphenyl)-2-phenylisoindolin-1-on (PPPBP)-Polycarbonat-Copolymer in der genannten Menge die Wärmeformbeständigkeitstemperatur der gesamten thermoplastischen Zusammensetzung um mindestens 5 % jedoch nicht mehr als 15% im Vergleich zur Wärmeformbeständigkeitstemperatur der thermoplastischen Zusammensetzung ohne das hochwärmebeständige 3,3-Bis(4-hydroxyphenyl)-2-phenylisoindolin-1-on (PPPBP)-Polycarbonat-Copolymer erhöht.

7. Thermoplastische Zusammensetzung nach Anspruch 1, wobei der Einschluss von hochwärmebeständigem 3,3-Bis(4-hydroxyphenyl)-2-phenylisoindolin-1-on (PPPBP)-Polycarbonat-Copolymer in der genannten Menge die Wärmeformbeständigkeitstemperatur der gesamten thermoplastischen Zusammensetzung um mindestens 5 %, aber nicht mehr als 10% im Vergleich zur Wärmeformbeständigkeitstemperatur der thermoplastischen Zusammensetzung ohne das hochwärmebeständige PPPBP-Polycarbonat-Copolymer erhöht.

8. Thermoplastische Zusammensetzung, umfassend:

   (a) von 5 Gew.-% bis 55 Gew.-% einer Polycarbonatkomponente;
   (b) von 44,5 Gew.-% bis 85 Gew.-% eines 3,3-Bis(4-hydroxyphenyl)-2-phenylisoindolin-1-on (PPPBP)-Polycarbonat-Copolymers; und
   (c) von 0,5 Gew.-% bis 10 Gew.-% mindestens eines Additivs zur Laserdirektstrukturierung, wobei

      die Zusammensetzung nach der Aktivierung mit einem Laser beschichtet werden kann, und
      die thermoplastische Zusammensetzung eine Wärmeformbeständigkeitstemperatur aufweist, die größer ist als die Wärmeformbeständigkeitstemperatur, die eine Vergleichszusammensetzung aufweist, die aus den im Wesentlichen gleichen Komponenten wie die thermoplastische Zusammensetzung besteht, aber ohne das 3,3-Bis(4-hydroxyphenyl)-2-phenylisoindolin-1-on (PPPBP)-Polycarbonat-Copolymer.

9. Thermoplastische Zusammensetzung nach Anspruch 8, wobei die thermoplastische Zusammensetzung eine Polycarbonatkomponente von 10 Gew.-% bis 15 Gew.-% umfasst.

10. Thermoplastische Zusammensetzung nach Anspruch 8, wobei die thermoplastische Zusammensetzung ein 3,3-Bis(4-hydroxyphenyl)-2-phenylisoindolin-1-on (PPPBP)-Polycarbonat-Copolymer von 50 Gew.-% bis 55 Gew.-% umfasst.

11. Thermoplastische Zusammensetzung nach Anspruch 8, wobei die thermoplastische Zusammensetzung mindestens ein Additiv zur Laserdirektstrukturierung von 5 Gew.-% bis 8 Gew.-% umfasst.

12. Thermoplastische Zusammensetzung nach Anspruch 8, wobei die thermoplastische Zusammensetzung mindestens ein Additiv zur Laserdirektstrukturierung von 4 Gew.-% bis 10 Gew.-% umfasst.

13. Thermoplastische Zusammensetzung nach Anspruch 8, wobei die thermoplastische Zusammensetzung mindestens ein Additiv zur Laserdirektstrukturierung von 7 Gew.-% bis 10 Gew.-% umfasst.

14. Thermoplastische Zusammensetzung nach Anspruch 1, wobei die thermoplastische Zusammensetzung mindestens

ein Polycarbonat-Siloxan-Copolymer von 8 Gew.-% bis 10 Gew.-% umfasst.

**15.** Thermoplastische Zusammensetzung nach Anspruch 1, wobei die thermoplastische Zusammensetzung mindestens ein Polycarbonat-Siloxan-Copolymer von 5 Gew.-% bis 12 Gew.-% umfasst.

## Revendications

**1.** Composition thermoplastique comprenant :

(a) de 5% en poids à 55% en poids d'au moins un polycarbonate aromatique ;
(b) de 45% en poids à 85% en poids d'au moins un copolymère 3,3-bis(4-hydroxyphenyl)-2-phenylisoindolin-1-one (PPPBP)-polycarbonate de haute résistance à la chaleur ;
(c) de plus de 0% en poids à 15% en poids d'au moins un copolymère polycarbonate-siloxane ; et
(d) de 0,5% en poids à 10% en poids d'au moins un additif de structuration directe au laser, dans laquelle

l'additif de structuration directe au laser est une charge sélectionnée parmi un oxyde métallique, une charge enduite d'un oxyde métallique, ou une combinaison des deux,
la composition thermoplastique est en mesure d'être plaquée après avoir été activée avec l'utilisation d'un laser, et
la composition a une température de résistance à la chaleur supérieure à 150 degrés Celsius (°C), telle que déterminée par ASTM D 648.

**2.** La composition thermoplastique de la revendication 1, dans laquelle le copolymère 3,3- bis(4-hydroxyphenyl)-2-phenylisoindolin-1-one (PPPBP)-polycarbonate de haute résistance à la chaleur a une moyenne en poids du poids moléculaire supérieure à 15 000, comprenant des unités structurales de plus de 15 pour cent en moles dérivées de 2-aryl-3, 3-bis (4-hydroxyaryl) phthalimide (Formule I) :

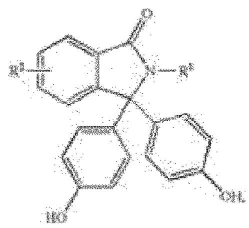

(I)

dans laquelle $R^1$ est sélectionné dans le groupe composé de groupes aryle ayant 6 à 25
atomes de carbone et de groupes aralkyle ayant de 7 à 25 atomes de carbone, et R2 est sélectionné dans le groupe composé d'un hydrogène, d'un groupe hydrocarbyle, et d'un halogène ; et le reste des unités structurales dérivées de 2, 2-bis (4-hydroxyphenyl) propane (bisphenol A).

**3.** La composition thermoplastique de la revendication 1, dans laquelle l'inclusion d'un copolymère PPPBP-polycarbonate de haute résistance à la chaleur dans ladite quantité élève la température de résistance à la chaleur de la totalité de la composition thermoplastique dans une proportion comprise entre 5% et 30% par comparaison avec la température de résistance à la chaleur de la composition thermoplastique sans le copolymère 3,3-bis(4-hydroxyphenyl)-2-phenylisoindolin-1-one (PPPBP)- polycarbonate.

**4.** La composition thermoplastique de la revendication 1, dans laquelle l'inclusion d'un copolymère 3,3-bis(4-hydroxyphenyl)-2-phenylisoindolin-1-one (PPPBP)- polycarbonate de haute résistance à la chaleur dans ladite quantité élève la température de résistance à la chaleur de la totalité de la composition thermoplastique d'au moins 5%, mais sans dépasser 25% par comparaison avec la température de résistance à la chaleur de la composition thermoplastique sans le copolymère PPPBP-polycarbonate de haute résistance à la chaleur.

**5.** La composition thermoplastique de la revendication 1, dans laquelle l'inclusion d'un copolymère 3,3-bis(4-hydroxyphenyl)-2-phenylisoindolin-1-one (PPPBP)- polycarbonate de haute résistance à la chaleur dans ladite quantité élève la température de résistance à la chaleur de la totalité de la composition thermoplastique d'au moins 5%, mais sans dépasser 20% par comparaison avec la température de résistance à la chaleur de la composition thermoplastique sans le copolymère 3,3-bis(4-hydroxyphenyl)-2-phenylisoindolin-1- one (PPPBP)-polycarbonate de haute résistance à la chaleur.

6. La composition thermoplastique de la revendication 1, dans laquelle l'inclusion d'un copolymère 3,3-bis(4-hydroxyphenyl)-2-phenylisoindolin-1-one (PPPBP)- polycarbonate de haute résistance à la chaleur dans ladite quantité élève la température de résistance à la chaleur de la totalité de la composition thermoplastique d'au moins 5%, mais sans dépasser 15% par comparaison avec la température de résistance à la chaleur de la composition thermoplastique sans le copolymère 3,3-bis(4-hydroxyphenyl)-2-phenylisoindolin-1- one (PPPBP)-polycarbonate de haute résistance à la chaleur.

7. La composition thermoplastique de la revendication 1, dans laquelle l'inclusion d'un copolymère 3,3-bis(4-hydroxyphenyl)-2-phenylisoindolin-1-one (PPPBP)- polycarbonate de haute résistance à la chaleur dans ladite quantité élève la température de résistance à la chaleur de la totalité de la composition thermoplastique d'au moins 5%, mais sans dépasser 10% par comparaison avec la température de résistance à la chaleur de la composition thermoplastique sans le copolymère PPPBP-polycarbonate de haute résistance à la chaleur.

8. Composition thermoplastique comprenant :

(a) de 5% en poids à 55% en poids d'un composant de polycarbonate,
(b) de 44,5% en poids à 85% en poids d'un copolymère 3,3-bis(4-hydroxyphenyl)-2-phenylisoindolin-1-one (PPPBP)-polycarbonate ; et
(c) de 0,5% en poids à 10% en poids d'au moins un additif de structuration directe au laser, dans laquelle

la composition est en mesure d'être plaquée après avoir été activée avec l'utilisation d'un laser, et
la composition thermoplastique présente une température de résistance à la chaleur supérieure à la température de résistance à la chaleur présentée par une composition comparable comportant les composants substantiellement identiques à ceux de la composition thermoplastique, mais sans le copolymère 3,3-bis(4-hydroxyphenyl)-2-phenylisoindolin-1-one (PPPBP)- polycarbonate.

9. La composition thermoplastique de la revendication 8, dans laquelle la composition thermoplastique comprend un composant de polycarbonate de 10% en poids à 15% en poids.

10. La composition thermoplastique de la revendication 8, dans laquelle la composition thermoplastique comprend un copolymère 3,3-bis(4-hydroxyphenyl)-2-phenylisoindolin-1-one (PPPBP)- polycarbonate de 50% en poids à 55% en poids.

11. La composition thermoplastique de la revendication 8, dans laquelle la composition thermoplastique comprend au moins un additif de structuration directe au laser de 5% en poids à 8% en poids.

12. La composition thermoplastique de la revendication 8, dans laquelle la composition thermoplastique comprend au moins un additif de structuration directe au laser de 4% en poids à 10% en poids.

13. La composition thermoplastique de la revendication 8, dans laquelle la composition thermoplastique comprend au moins un additif de structuration directe au laser de 7% en poids à 10% en poids.

14. La composition thermoplastique de la revendication 1, dans laquelle la composition thermoplastique comprend au moins un copolymère polycarbonate-siloxane de 8% en poids à 10% en poids.

15. La composition thermoplastique de la revendication 1, dans laquelle la composition thermoplastique comprend au moins un copolymère polycarbonate-siloxane de 5% en poids à 12% en poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62328843
- US 7786246 B